# EUROPÄISCHE PATENTSCHRIFT

(11) **EP 1 373 762 B1**
(45) Veröffentlichungstag und Bekanntmachung des Hinweises auf die Patenterteilung: **01.12.2004**
(21) Anmeldenummer: 02732345.0
(22) Anmeldetag: 25.03.2002
(51) Int. Cl.: F16H 55/54, F16H 9/10

(54) **ZAHNRIEMENSCHALTUNG**
TOOTHED BELT GEAR-SHIFTING MECHANISM
TRANSMISSION A COURROIE CRANTEE

(30) Priorität: 28.03.2001 DE 10115377
(43) Veröffentlichungstag der Anmeldung: 02.01.2004
(73) Patentinhaber: Hettlage, Eckart, 71560 Sulzbach (DE)
(72) Erfinder: HETTLAGE, Eckart, 71560 Sulzbach (DE); HETTLAGE, Niko, 76229 Karlsruhe (DE)
(86) Internationale Anmeldenummer: PCT/DE2002/001067
(87) Internationale Veröffentlichungsnummer: WO 2002/088575

(56) Entgegenhaltungen:
- WO-A-98/11364
- DE-A- 3 107 255
- DE-A- 19 737 038
- US-A- 4 325 702
- US-A- 5 476 422

## Beschreibung

Die Erfindung betrifft ein Zahnriemen- oder Kettengetriebe mit mindestens einem Antriebs- und einem Abtriebsrad, die im Abstand zueinander auf Achsen gelagert sind und einen um diese geführten Zahnriemen oder eine Kette sowie eine Spannvorrichtung für den Zahnriemen oder die Kette aufweisen, wobei zur Änderung des Übersetzungsverhältnisses zwischen Antriebs- und Abtriebsrad wenigstens eines der Räder mittels einer Verstelleinrichtung radial spreizbar ist.
Derartige Getriebeanordnungen finden beispielsweise bei Fahrradschaltungen Verwendung und sind unter anderem aus der DE-A-3107255, die als nächstliegender Stand der Technik angesehen wird, bekannt. Bekannt sind auch die Vorteile von Zahnriemen gegenüber der weitverbreiteten Kette bezüglich Wirkungsgrad, Verschleißarmut, Langlebigkeit, Freiheit von Schmierung und geringerer Empfindlichkeit gegenüber Schmutz. Die folgende Beschreibung bezieht sich auf einen Zahnriemen, kann jedoch sinngemäß auf eine Kette übertragen werden.
Die DE-A-107255 beschreibt ein in seinem Umfang verstellbares Zahnrad, welches in Sektoren eingeteilt ist. Eine auf einer Achse gelagerte Grundplatte besitzt in jedem Sektor einen radialen Schlitz, in welchem ein in radialer Richtung nach außen mit Zähnen versehenes Segment gleiten und in bestimmten Positionen gerastet werden kann. Wenn alle Segmente die gleiche radiale Position einnehmen bilden sie mit ihren Zähnen ein polygonförmiges Zahnrad, auf welches der Zahnriemen formschlüssig passt.
Dazu ist eine Verstelleinrichtung beschrieben, die dazu dient, die Segmente im nicht vom Zahnriemen umschlungenen Winkelbereich während der Drehung des Rades zu verschieben, so dass sie bei einem kleineren oder größeren Radius wieder arretiert werden und hier erneut ein für den Zahnriemen passendes Polygon bilden. Da die Segmente in diesem Winkelbereich vom Antriebsstrang unbelastet sind, lassen sie sich leicht verstellen, ohne dass der gesamte Antrieb entlastet werden muss.
Die im Folgenden beschriebene Erfindung verbessert diese Anordnung vor allem bezüglich zuverlässigem Betrieb in der praktischen Anwendung.
Die zu lösenden Probleme waren dabei insbesondere:
- Schwergängiges, geräuschbehaftetes Schalten
- Zu grobe Stufung der Gänge
- Versehentliches Falschpositionieren einzelner (von einander unabhängiger) Segmente durch Fehlbedienung der Verstelleinrichtung oder durch mangelhafte Rastung bei Verschmutzung und dadurch bedingter Verlust der Momentübertragung bzw. Beschädigung von Teilen des Getriebes
- Durchrutschen des Zahnriemens unter hoher Last, besonders bei kleinen Zahnraddurchmessern

Figur 1 zeigt die erfindungsgemäße Schaltung in Vorderansicht in einer inneren Gangstufe.
Figur 2 zeigt die erfindungsgemäße Schaltung in Vorderansicht in einer äußeren Gangstufe.
Figur 3 zeigt die erfindungsgemäße Schaltung von hinten. Dabei ist eine Begrenzungsscheibe, welche die einzelnen Segmente bei einer Fehlbedienung oder sonstigen Fehlfunktion an einer unkontrollierten Bewegung hindert, zu sehen.
Figur 4 zeigt einen Schnitt durch die Zahnradgrundplatte und die Begrenzungsscheibe, wobei ein Zahnsegment und die Anordnung des Anschlagstiftes zu sehen sind.
Figur 5 zeigt dreidimensional ein Zahnsegment von schräg hinten, ohne Grundplatte, mit dem Anschlagstift, der in den Schlitz der Begrenzungsscheibe ragt.
Figur 6 zeigt einen Ausschnitt der Begrenzungsscheibe mit der erfindungsgemäßen Form eines Schlitzes.
Figur 7 zeigt die erfindungsgemäße Zahnform der Schaltung in einer mittleren Position.
Figur 8 zeigt die erfindungsgemäße Zahnform der Schaltung in der inneren Position.
Figur 9 zeigt die erfindungsgemäße Zahnform der Schaltung in der äußeren Position.
Figur 10 zeigt die erfindungsgemäße Verstelleinrichtung in der inneren Position.
Figur 11 zeigt die erfindungsgemäße Verstelleinrichtung in einer mittleren Position.
Figur 12 zeigt die erfindungsgemäße Verstelleinrichtung in der äußeren Position.

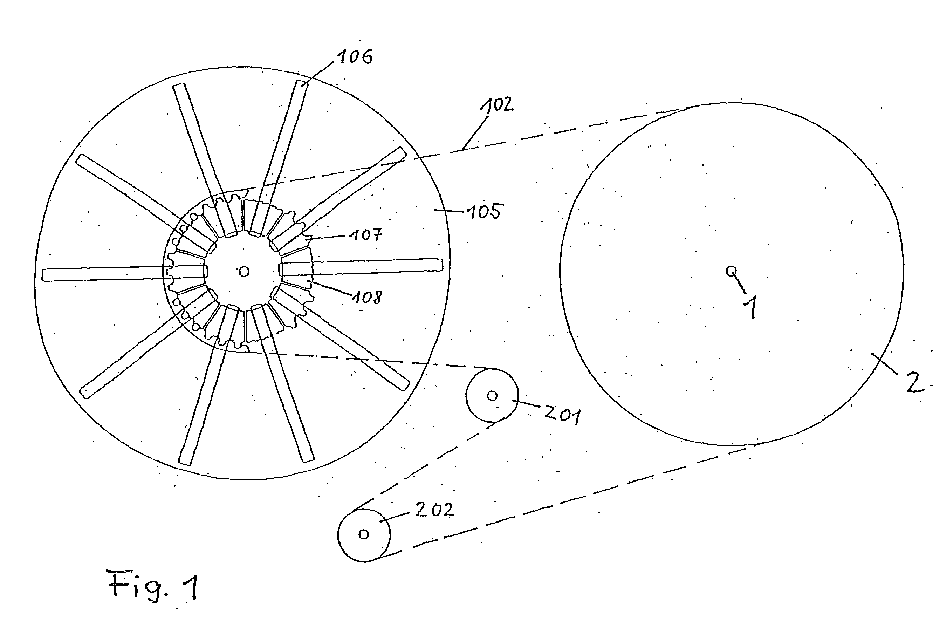

In Figur 1 ist das radial spreizbare Zahnrad 105 zusammen mit einem Antriebsrad 2, welches auf einer Achse 1 gelagert ist, zu sehen. Über einen Zahnriemen 102 sind die beiden Räder kraftschlüssig miteinander verbunden. Eine Spannvorrichtung bestehend aus den Rollen 201 und 202 sorgt für den Längenausgleich des Riemens beim Schalten. Die Zahnsegmente 107, 108 können in den Schlitzen 106 radial verschoben und an geeigneten Positionen gerastet werden und bilden damit das zum Schalten nötige veränderliche Zahnrad.

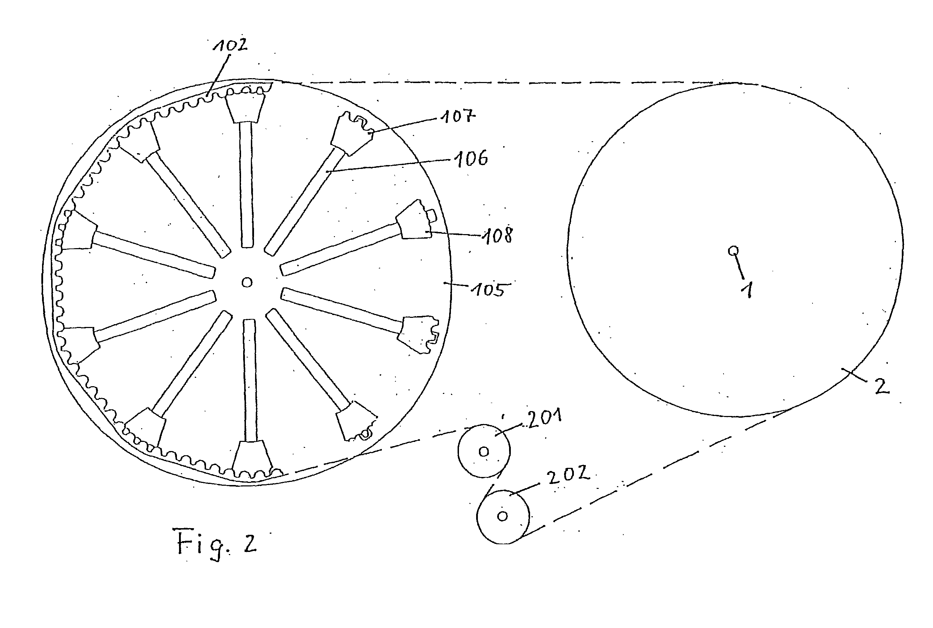

In Figur 2 hat das spreizbare Zahnrad 105 seinen größten Umfang angenommen. Zu erkennen sind hier auch die unterschiedlichen Zahnsegmente 107 und 108. Während die Zahnsegmente 107 mit ihrer Zahnform für einen Kraftschluss mit dem Zahnriemen 102 sorgen, stützen die Segmente 108 den Zahnriemen 102 lediglich in der richtigen radialen Position ab, tragen jedoch nicht zum Kraftschluss bei. Der Vorteil dieser Anordnung liegt in der doppelten Anzahl von möglichen radialen Positionen der Zahnsegmente 107, 108 bei welchen der Zahnriemen 102 passt, verglichen mit einer konventionellen Zahnradanordnung, bei der alle Zahnsegmente wie die Segmente 107 ausgebildet sind.
Das Resultat ist eine Schaltung mit doppelt so vielen Gängen und feinerer Stufung sowie leichter gängiger Schaltung.

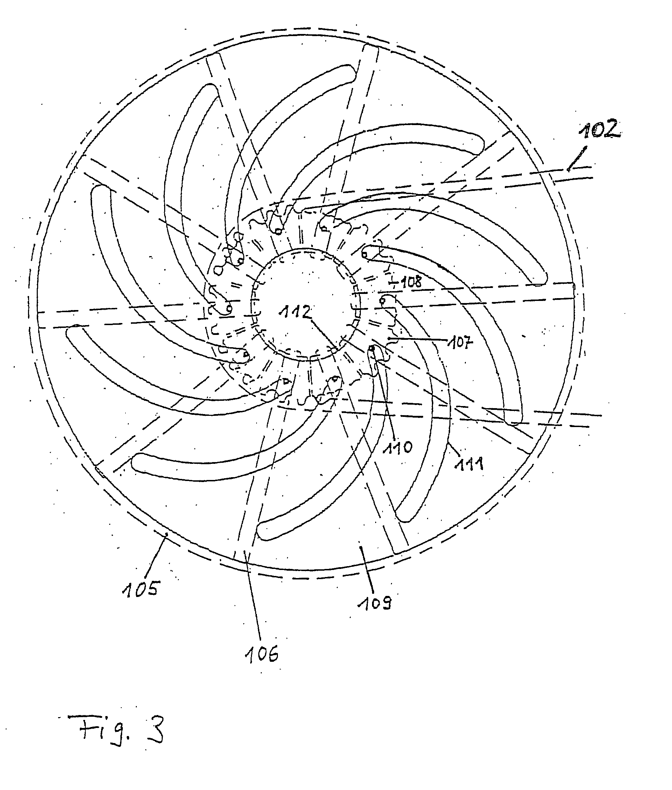

In Figur 3 wird gezeigt wie verhindert wird, dass die einzelnen von einander unabhängig verschiebbaren Zahnsegmente 107, 108 unerlaubte radiale Positionen einnehmen können. Verhindert wird dies durch die Begrenzungsscheibe 109, die momentfrei auf der gleichen Drehachse wie Zahnrad 105 und parallel zu diesem angeordnet ist und sich mit im dreht. Entsprechend der Anzahl der Segmente des Zahnrads 105 besitzt die Begrenzungsscheibe 109 bogenförmige Schlitze 111. In die Schlitze 111 ragen Anschlagstifte 110, die auf einer Seite der Segmente 107, 108 angebracht sind.
Der Zahnriemen 102 umschlingt einen Teil der Zahnsegmente 107, 108. Da der Zahnriemen unter Last steht werden diese Zahnsegmente in ihrer Position festgehalten und können nicht radial verschoben werden. Entsprechend dem gewollten Spiel 113 (siehe Fig. 6) zwischen den Anschlagstiften 110 und den Schlitzen 111 kann sich die Begrenzungsscheibe 109 durch ein angreifendes Moment relativ zum Zahnrad nur soweit drehen wie es die Anschlagstifte 110 der vom Zahnriemen 102 festgehaltenen Segmente 107, 108 zulassen. Das Spiel 113 ist so gewählt, dass sich die freien Segmente 107,108 genau soweit radial verschieben lassen wie es für die nächste Stufe der Schaltung erforderlich ist. Eine weitere Verschiebung wird durch die Anschlagstifte 110 verhindert. Das an der Begrenzungsscheibe 109 angreifende Moment wird von den beim Schalten bewegten freien Segmenten 107, 108 aufgebracht. Ein Schalten, d. h. ein radiales Verschieben der Segmente 107, 108, kann nur während einer Drehung des Zahnrades 105 erfolgen. Dabei kommen nacheinander alle Segmente 107, 108 in den vom Zahnriemen 102 nichtumschlungenen Bereich und werden verschoben.
Wenn alle Segmente die gewünschte neue radiale Position erreicht haben, d. h. nach einer vollen Drehung des Zahnrades 105, wird die Begrenzungsscheibe 109 freigegeben für eine Drehung innerhalb des Spiels 113. Die Richtung dieser Drehung hängt davon ab ob die Segmente 107, 108 beim nächsten Schaltvorgang nach innen oder nach außen verschoben werden sollen.

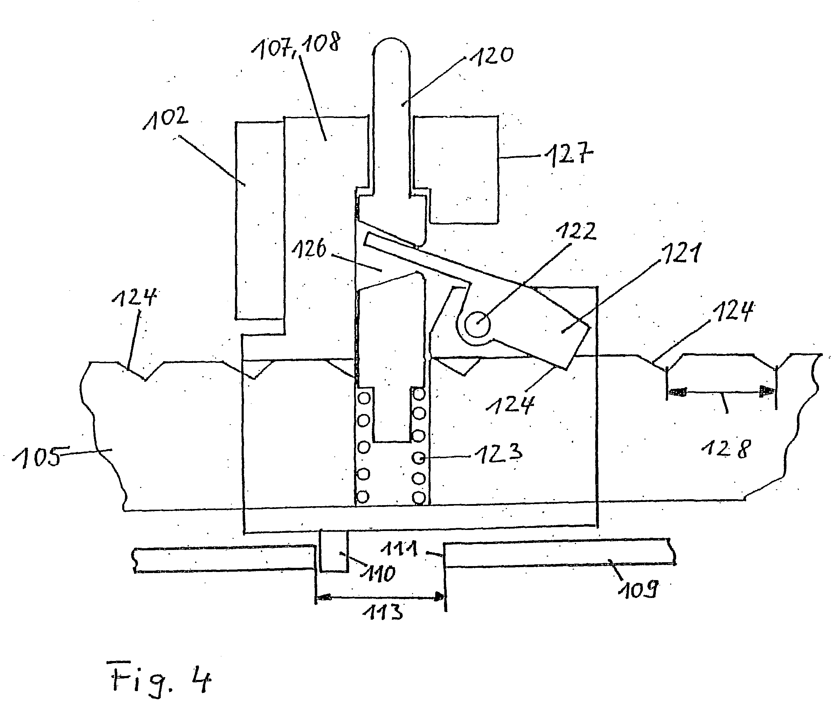

Figur 4 zeigt einen radialen Schnitt durch das Zahnrad 105 in der Mitte eines Schlitzes 106. Der Schnitt geht dabei ebenso durch die Begrenzungsscheibe 109, das Zahnsegment 107 oder 108 sowie den Zahnriemen 102.
Zu erkennen ist hier der Schlitz 111 in der Begrenzungsscheibe, der Anschlagstift 110 sowie das Spiel 113 welches etwas größer ist als der Abstand 128 zwischen zwei Rastpositionen. Das Spiel 113 muss deshalb etwas größer sein damit die Zahnsegmente 107, 108 etwas über ihre nächste Rastposition hinaus verschoben werden können um dann sicher dort einzurasten.
Zu erkennen ist auch der Rastmechanismus des Zahnsegmentes 107,108. Er besteht aus der Wippe 121 welche über die Drehachse 122 am Zahnsegment 107, 108 gelagert ist, sowie einem beweglichen Stift 120 in dessen Schlitz 126 die Wippe 121 mit ihrem stielförmigen Ende eingreift. Eine Feder 123 drückt den Stift 120 in eine Richtung und bewirkt somit eine Vorspannung der Wippe 121, dass diese in einer Kerbe 124 rastet. Die sägezahnartige Form der Kerbe 124 sowie die Anordnung von Wippe 121 und Drehachse 122 bewirken, dass die Rastung des Zahnsegmentes 107, 108 bei einer radial nach innen wirkenden Belastung durch den Zahnriemen 102 selbsthemmend ist, d. h. unter hoher Last nicht ausrastet.
Andererseits kann der Mechanismus, sobald das Zahnsegment 107,108 unbelastet vom Zahnriemen 102 ist, durch eine radial nach außen angreifende Kraft leicht ausgerastet und verschoben werden, was den Schaltvorgang in diese Richtung sehr einfach macht.
Soll der Schaltvorgang nach innen erfolgen, muss, wenn das Zahnsegment 107,108 vom Zahnriemen 102 unbelastet ist, zuerst der Stift 120 gegen die Feder 123 gedrückt werden um die Wippe 121 aus der Rastkerbe 124 zu bewegen. Danach kann das Zahnsegment 107, 108 radial nach innen verschoben werden bis es wieder, vorausgesetzt dass der Stift 120 nicht länger gedrückt bleibt, selbstständig in der nächst inneren Kerbe 124 einrastet.

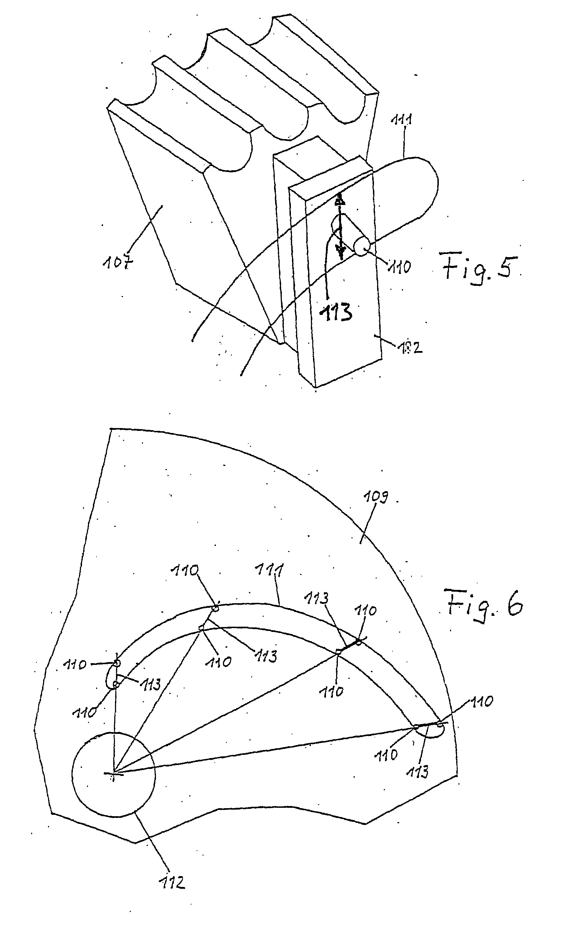

Zur Veranschaulichung ist in Figur 5 ein Zahnsegment 107 mit Anschlagstift 110 ohne die Grundplatte von Zahnrad 105 dargestellt. Von der Begrenzungsscheibe 109 ist hier nur der bogenförmige Schlitz 111 mit dem Spiel 113 dargestellt.

Figur 6 zeigt einen Ausschnitt der Begrenzungsscheibe 109 mit dem bogenförmigen Schlitz 111. Da das Spiel 113 immer radial wirken soll ist die Breite des Schlitzes 111 nicht konstant sondern variiert von innen nach außen.

Das Problem des Durchrutschens des Zahnriemens 102 bei hoher Last, speziell wenn die Zahnsegmente 107, 108 des Zahnrades 105 im inneren Bereich arbeiten, kann gelöst werden wenn die Zahnkontur der Zahnsegmente 107 nicht, wie nach dem Stand der Technik, dem kleinsten Zahnraddurchmesser entnommen werden sonder einem größeren Zahnraddurchmesser, z. B. dem mittleren bis größten.
In Figur 7 ist die Zahnkontur der Zahnsegmente 507 dem mittleren Durchmesser des Zahnrades 105 entnommen. Die Segmente 508 besitzen überhaupt keine Zähne und sind zugunsten der Zahnsegmente 507 schmal ausgeführt. Damit kann bei den Zahnsegmenten 507 die Anzahl der Zähne erhöht werden, was zu einer höheren Belastbarkeit führt, d. h. der Zahnriemen kann ein wesentlich höheres Moment übertragen bevor er durchrutscht.

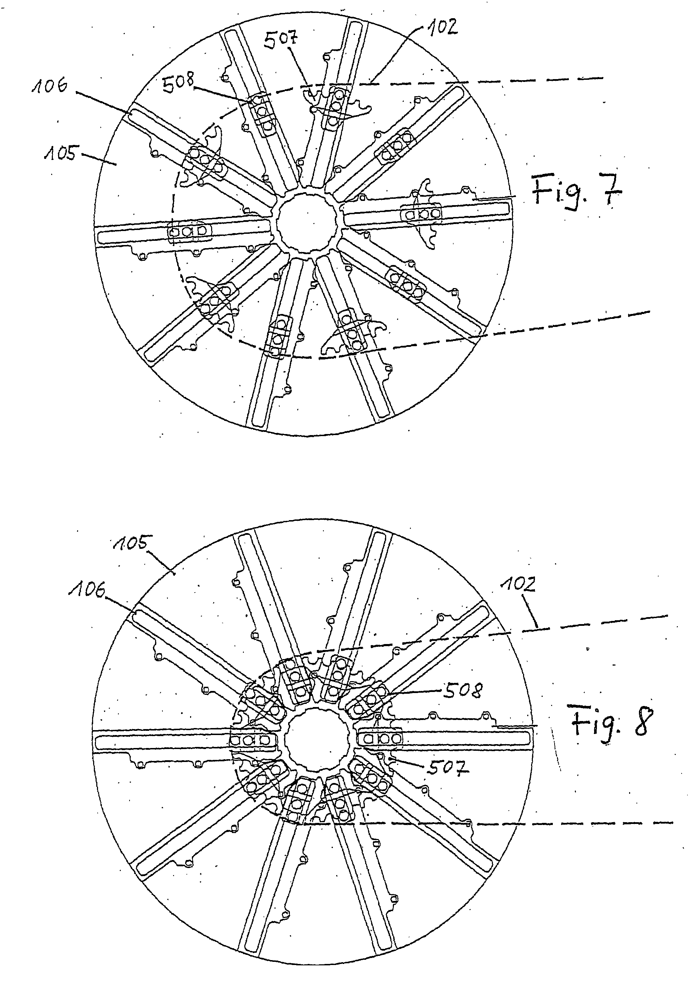

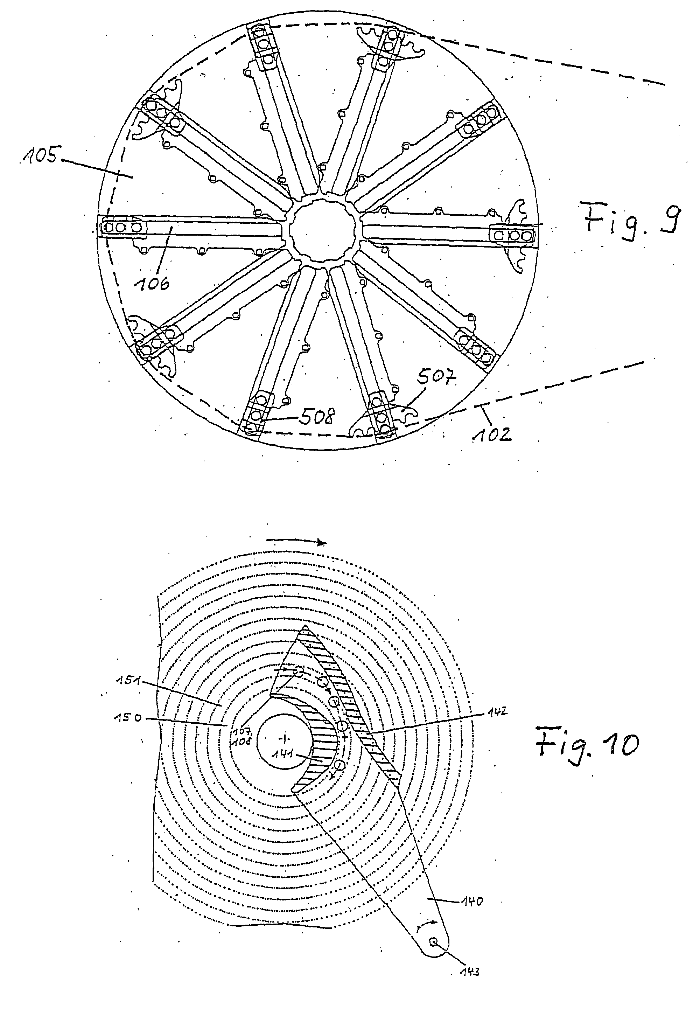

Die Figuren 8 und 9 zeigen das Zahnrad 105 mit den Segmenten 507 und 508 sowohl in der inneren als auch in der äußeren Position.
Speziell in der inneren Position, in der die Zahnsegmente 507 gegenüber einem idealen Zahnrad dieses Durchmessers eine geringere Wölbung aufweisen, wird ein stärkerer Eingriff des Zahnriemens erzwungen, was die höhere Momentübertragung möglich macht.

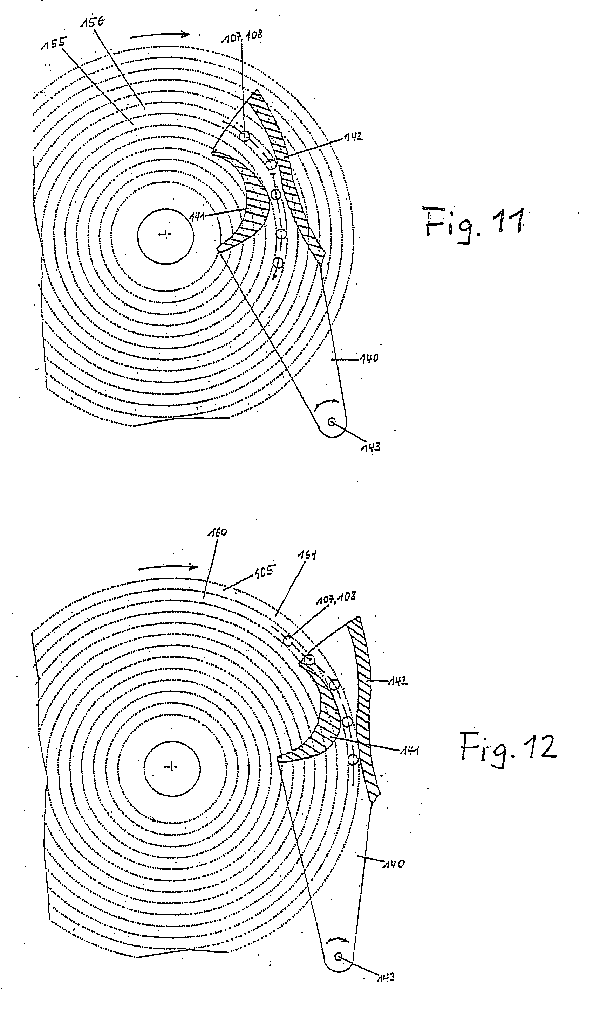

Figur 10 zeigt den am Rahmen (nicht dargestellt) über die Achse 143 drehbar gelagerten Schwenkarm 140, mit dessen Hilfe die Zahnelemente 507, 508 während des Schaltens verschoben werden, in seiner inneren Stellung. Bei einem Fahrrad kann der Schwenkarm 140 z. B. über Seilzüge mit einem Drehgriff am Lenker verbunden sein und damit in die verschiedenen zum Schalten nötigen Positionen gebracht werden. Mit Hilfe einer Rastung (nicht dargestellt) kann er die jeweils für einen Gang passende Position beibehalten.
Die bogenförmige Erhebung 141, welche am Schwenkarm 140 befestigt ist, dient dazu die Segmente 507, 508, wie in Figur 12 dargestellt, von einer Kreisbahn 160 auf die nächst äußere Bahn 161 zu verschieben. Die Form des Bogens 141 sowie die Wahl des Drehpunktes 143 ergeben für alle möglichen Positionen des Schwenkarms 140 einen flachen Winkel, mit dem die Zahnelemente 507, 508 mit ihrer Innenseite auflaufen und somit leichtgängig und geräuscharm verstellt werden.
Das Gleiche gilt für die äußere bogenförmige Erhebung 142, die ebenso am Schwenkarm 140 befestigt ist. Wie in Figur 10 und 11 gezeigt, verschiebt sie die Segmente 507, 508 nach innen, ebenfalls mit einem flachen Aufprallwinkel.
Beim Verstellen nach innen laufen die Segmente 507, 508 mit dem Stift 120 zuerst auf eine Rampe (nicht dargestellt) an der Innenseite des Bogens 142 auf. Dabei wird der Stift 120 gegen die Feder 123 gedrückt und die Wippe 121 entriegelt die Rastung. Dann läuft der Stift seitlich gegen die innere Wölbung des Bogens 142 und das Segment 507, 508 wird nach innen verschoben.

Sobald ein Segment 507, 508 den Bereich der Bögen 141, 142 verlässt wird der Stift 120 nicht mehr gedrückt und die Wippe 121 kann in der nächst inneren Kerbe einrasten.

## Patentansprüche

1. Radial spreizbares Zahnrad (105) mit auf gleichen Winkelabständen gelegenen radialen Schlitzen (106) für im gleichen Radius rastbare Segmente (107, 108 ; 507, 508) zum führen einer Kette oder eines Zahnriemens (102), **dadurch gekennzeichnet daß** die Segmente (107, 108 ; 507, 508), abwechselnd mit und ohne Zähne ausgestattet, wobei der Krümmungsradius des Zahnsegmentes (507, 508) bis zum maximal möglichen Radius des Zahnrades (105) gehen kann und wobei die Segmente (107, 108 ; 507, 508) im nicht durch die Kette oder den Zahnriemen (102) umschlungenen Winkelbereich mittels einer exzentrisch gelagerten, schwenkbaren Verstelleinrichtung (140) in teilungsgerechten radialen Stufen (128) positioniert werden und mit einer konzentrisch gelegenen drehbaren, jedoch drehmomentfreien Begrenzungsscheibe (109), die für jedes Segment (107, 108 ; 507, 508) einen spiralförmigen Schlitz (111) aufweist, in dem ein an dem Segment (107, 108 ; 507, 508) befestigter Anschlagstift (110) sich in radialer Richtung mit einem Spiel (113), das etwas größer ist als die radiale Stufe (128), bewegen kann.

2. Radial spreizbares Zahnrad (105) nach Anspruch 1 mit radial rastbaren Segmenten (107, 108 ; 507, 508), deren Rastmechanismus aus einer auf der Achse (122) gelagerten Wippe (121), an der Zahnradgrundplatte (105) in teilungsgerechtem Abstand gelegenen sägezahnförmigen Rastkerben (124), sowie aus einem Entriegelungsstift (120) und einer Vorspannfeder (123) besteht.

3. Radial spreizbares Zahnrad (105) nach Anspruch 1 und 2 dessen von außen
bedienbarer Verstellmechanismus (140) exzentrisch zum Zahnrad (105) am Rahmen mit einer Drehachse (143) gelagert ist und zum Verschieben der Segmente (107, 108 ; 507, 508) die Erhebungen (141, 142) aufweist.

## Claims

1. Radial variable tooth wheel (105) within equal angular distances, and positioned radial guides (106) at the same radius lockable segments (507, 508) alternating with or without teeth, whereas the bending radius of tooth segment (507) can be as large as the maximum possible radius of tooth wheel (105), and where those segments (507, 508), which are not enfolded by the tooth belt (102), can be radial displaced and locked in new positions, fitting to the pitch of the tooth belt (102) by an eccentric rotating gear shift device (140), and where the radial displacement of individual segments (507, 508) is limited to one gear step per rotation by a concentric suspended torque free limiting disc (109), which can rotate, when pushed by a segment (507, 508), which has for each segment (507, 508) a spiral shaped slot (111) in which a stop pin (110), fixed to each segment (507, 508), can move radial with a play (113), which is slightly larger than a radial step (128).

2. Radial variable tooth wheel (105), according to claim 1 with radial locking segments (507, 508), with a locking mechanism consisting of a seesaw (121), an axis (122), a pin (120), a spring (123) and equidistant notches (124) fitting to the pitch of the tooth belt.

3. Radial variable tooth wheel (105) according to claims 1 and 2, with a gear shifting device (140), which is suspended eccentric to the tooth wheel (105) at frame comprising bows (141 and 142) for the shifting of the segments (507, 508).

## Revendications

1. La roue variable radiale de dent (105) sur des distances angulaires égales, et les guides radiaux placés (106) aux mêmes segments vérouillables de rayon (507, 508) alternant avec ou sans des dents, tandis que le rayon de cintrage du segment de dent (507) peut être aussi grand que le rayon possible maximum de la roue de dent (105), et où ces segments (507, 508), qui ne sont pas entourés par la courroie de dent (102), peuvent être radiale déplacés et fermé à clef en nouvelles positions, s'adaptant au lancement de la courroie de dent (102) par un dispositif tournant excentrique de changement de vitesse (140), et où le radial le déplacement des différents segments (507, 508) est limité à une étape de vitesse par rotation par un couple suspendu concentrique limitant librement le disque (109), qui peut tourner, une fois poussé par un segment (507, 508), qui a pour chaque segment (507, 508) une fente formée en spirale (111) dans laquelle une goupille d'arrêt (110), fixé à chaque segment (507, 508), peut déplacer le radial avec un jeu (113), qui est légèrement plus grand qu'une étape radiale (128).

2. Roue variable radiale de dent (105), selon la revendication 1 avec les segments de verrouillage radiaux (507, 508), avec un dispositif de verrouillage se composant d'une balançoire (121), d'un axe (122), d'une goupille (120), d'un ressort (123) et des entailles équidistantes (124) s'adaptant au lancement de la courroie de dent.

3. Roue variable radiale de dent (105) selon les revendications 1 et 2, avec un dispositif de décalage de vitesse (140), qui est excentrique suspendu à la roue de dent (105) à l'armature comportant des arcs (141 et 142) pour le décalage des segments (507, 508).
